(19) Europäisches Patentamt
European Patent Office
Office européen des brevets

(11) EP 0 649 093 B1

# (12) EUROPEAN PATENT SPECIFICATION

(45) Date of publication and mention
of the grant of the patent:
**04.03.1998 Bulletin 1998/10**

(51) Int Cl.⁶: **G06F 11/26**

(21) Application number: **94307532.5**

(22) Date of filing: **13.10.1994**

(54) **Logic gate testing**

Prüfen logischer Gatter

Test de portes logiques

(84) Designated Contracting States:
**DE FR GB IT NL**

(30) Priority: **15.10.1993 GB 9321366**

(43) Date of publication of application:
**19.04.1995 Bulletin 1995/16**

(73) Proprietor: **Holness, Peter John
Hertford (GB)**

(72) Inventors:
• **Holness, Peter J.,
British Aerospace Defence Ltd.
Hertfordshire, SG1 2DA (GB)**

• **Patel, Mukesh, c/o Jayresh R Patel
Texas Zip Code 75044 (US)**

(74) Representative: **Gallafent, Antony Xavier et al
Gallafent & Co.,
9 Staple Inn
London WC1V 7QH (GB)**

(56) References cited:
**EP-A- 0 073 946          EP-A- 0 491 998
EP-A- 0 509 713**

• **PROCEEDINGS INTERNATIONAL TEST
CONFERENCE 1991 pages 1061 - 1068 M
KANZAKI ET AL. 'Programming for parallel
pattern generators'**

## Description

This invention relates to an apparatus for generating digital waveforms for use in the testing of logic gates.

In order to test logic gates, there is a requirement for sending uniquely coded bit streams along a set of wires which are connected to the gates under test.

A conventional approach for synchronous testing of an array of gates includes the following steps;

(i) partition the requirement into clock periods,
(ii) define the most significant bit (MSB) and the least significant bit (LSB) for the wires,
(iii) tabulate logic states in columns for the required bit-streams and calculate a decimal word for each column,
(iv) read out the decimal words one by one into the gate array.

This invention performs the above functions and further provides a novel approach for generating and controlling the bit-streams.

According to this invention as set forth in the claims, there is provided apparatus for generating digital waveforms for testing an array of logic gates, said apparatus including calculator means operable to receive a set of input values which form an argument of a generator equation and to create a sequence of digital output values each comprising the calculated result of the generator equation, and means for applying said digital output values to the array of logic gates under test.

The means for applying the digital output values to the logic gate array could be simply a set of wires, buffered if necessary.

The set of input values could be stored in a memory and clocked into the calculator means at a desired rate. Alternatively, the set of input values could be fed into the calculator means from an on-the-fly buffer / processor.

One or more generator equations could be stored in a second memory to which the calculator means has access. Generation of waveforms based on the concept of calculating the results of an generator equation are described in detail in our co-pending European Patent Application; EP-A-509,713. Therein, certain generator equations are termed "Portmanteau functions", one example being, the inverse of a trigonometric function ie arc.cos(sin P). Herein, a "Portmanteau Function" can be any generator equation.

Some embodiments of the invention will now be described, by way of example only, with reference to the drawings in which:

Figure 1 illustrates, in block diagram form, apparatus for testing logic gates in accordance with the invention, and;
Figures 2A and 2B show logic states relating to the outputs of the apparatus of Figure 1;

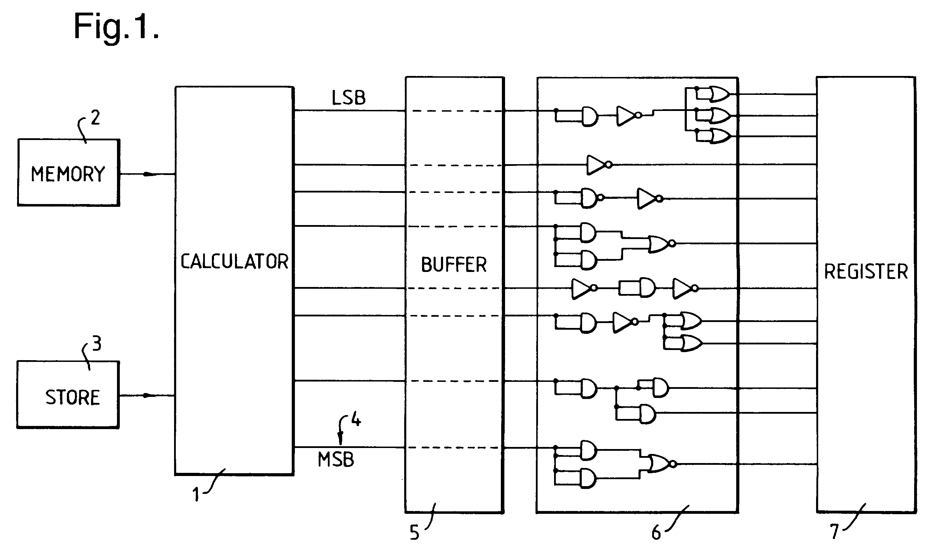

In Figure 1, a calculator 1 has inputs from a memory 2 and a store 3. The calculator 1 has eight digital output lines 4 which are clocked out via a buffer 5 to an array of logic gates 6 under test. Although eight output lines are shown in the Figure, this is by no means a limitation, more lines or fewer lines may be chosen if desired. Also, the complexity of the gate array shown in Figure 1 and the number of gate array output lines is entirely arbitary. Each output line from the LSB through to the MSB is attached to a corresponding input line to the array 6. The output lines of the gate array 6 can be monitored by suitable data recording equipment or clocked into a register 7 for future scrutiny.

The memory 2 has stored therein a generator equation (i.e. a "Portmanteau Function") and the store 3 contains discrete values of a parameter forming the argument of the Portmanteau Function. For example in a general case, say that the Portmanteau Function is

$$y = f(P)$$

i.e. y is some function of P, a number of discrete values of P being held in the store 3 and clocked into the calculator 1 in succession. The calculator 1 is pre-programmed with the necessary algorithms for calculating successive values of y for each value of P set between pre-chosen limits. Hence, the calculated values of y appear as a sequence of numbers, but in binary form (eight bits in this example), at the output of the calculator 1. The logic level on each of the eight lines at any instant is completely under the control of the user who, by choosing the specific generator equation, values and clocking rate of the calculator, can arrange for any specific digital stream to appear on each line and therefore activate the associated logic gate in the array 6.

For example a periodic ramp Portmanteau Function;
e.g.

$$y = \arctan\left(\tan\frac{P}{2}\right)$$

can provide ascending and / or descending bit streams. Alternatively, a single ramp waveform could also be generated using the simpler form: $y=P$ over a suitable range of P.

In a further example, arbitrary staircase generator equations can generate arbitary word streams. It can be shown that in the general case, a staircase waveform can be generated using the equation;

$$y(P)=C_0+C_1\mathrm{sgn}(P-P_1)+C_2\mathrm{sgn}(P-P_2)+C_3\mathrm{sgn}(P-P_3)....C_n\mathrm{sgn}(P-P_n) \qquad (i)$$

where the coefficients $C_0, C_1, C_2, C_3$, etc. determine the word values, and shifts $P_1, P_2, P_3$, etc. determine the point (i.e. the number of clock intervals) where each word state changes.

The general solution for the amplitude coefficients $C_0$-$C_n$ is as follows:

$$C_0 = \sum_{j=1}^{n} C_n$$

$$C_1 = \frac{y_1}{2}$$

$$C_2 = \frac{y_2 - y_1}{2}$$

$$C_n = \frac{y_n - y_{n-1}}{2}$$

where the y values are the actual required decimal word values.

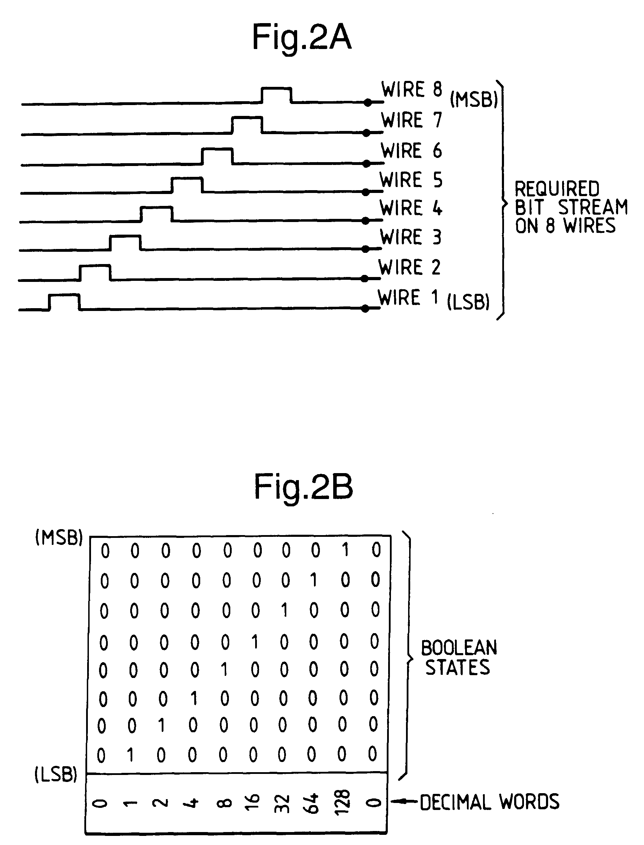

In a specific example, suppose there is a requirement for each gate to be held at a logic high level in succession i.e. that the bit streams on each of the eight wires comprising the calculator output should be as represented in Figure 2A and with the corresponding Boolean states and decimal word values shown in Figure 2B. Each Boolean state in succession corresponds therefore to the decimal words 0,1,2,4,8,16,32,64 and 128.

This requirement can be achieved by choosing a generator equation,

$$y=2^P$$

for values of P equalling 0,1,2,3,4,5,6 and 7. The length of time for which each bit is held high can be controlled by the rate at which the P values are clocked out of the store 3 into the calculator 1.

## Claims

1. Apparatus for generating digital waveforms for testing an array of logic gates (6), said apparatus including calculator means (1) operable to receive a set of input values which form an argument of a generator equation and to create a sequence of digital output values each comprising the calculated result of the generator equation, and means (4) for applying said digital output values to the array of logic gates (6) under test.

2. Apparatus according to claim 1 in which the means for applying the digital output values to the array of logic gates is a set of wires (4).

3. Apparatus according to claim 1 or claim 2 in which the means for applying the digital output values to the array of logic gates (6) includes a buffer (5).

4. Apparatus according to any preceding claim and including a first memory (3) connected to the said calculator means (1) for storing the said received set of input values.

5. Apparatus according to any preceding claim and including a second memory (2) connected to the calculator said means (1) for storing a generator equation.

6. Apparatus according to any preceding claim in which the generator equation includes a term comprising the inverse of a trigonometric function.

7. Apparatus according to claim 1 in which the generator equation has the form

$$y(P)=C_0+C_1 sgn(P-P_1)+C_2 sgn(P-P_2)+C_3 sgn(P-P_3)....C_n sgn(P-P_n)$$

8. A method for generating digital waveforms for testing an array of logic gates (6), the method including the steps of;

receiving a set of input values which form the argument of a generator equation,
creating a sequence of output values in binary form, each output value comprising the calculated result of the generator equation corresponding to each input value, and
outputting said sequence of output values to the array of logic gates (6) under test.

**Patentansprüche**

1. Vorrichtung zum Erzeugen digitaler Wellenformen zum Prüfen einer Anordnung logischer Gatter (6), welche Vorrichtung ein zum Aufnehmen eines Satzes von ein Argument einer Erzeugergleichung bildenden Eingabewerten und zum Schaffen einer Folge von jeweils das errechnete Ergebnis der Erzeugergleichung umfassenden digitalen Ausgabewerten betreibbares Rechnermittel (1) und ein Mittel (4) zum Anlegen der digitalen Ausgabewerte an die Anordnung der in Prüfung befindlichen logischen Gatter (6) enthält.

2. Vorrichtung nach Anspruch 1, bei der das Mittel zum Anlegen der digitalen Ausgabewerte an die Anordnung der logischen Gatter ein Satz von Drähten (4) ist.

3. Vorrichtung nach Anspruch 1 oder 2, bei der das Mittel zum Anlegen der digitalen Ausgabewerte an die Anordnung der logischen Gatter (6) einen Puffer (5) enthält.

4. Vorrichtung nach einem der vorangehenden Ansprüche, die einen ersten, an dem Rechnermittel (1) angeschlossenen Speicher (3) zum Speichern des aufgenommenen Satzes von Eingabewerten enthält.

5. Vorrichtung nach einem der vorangehenden Ansprüche, die einen zweiten, an dem Rechnermittel (1) angeschlossenen Speicher (2) zum Speichern einer Erzeugergleichung enthält.

6. Vorrichtung nach einem der vorangehenden Ansprüche, bei der die Erzeugergleichung einen Term enthält, der das Inverse einer trigonometrischen Funktion umfaßt.

7. Vorrichtung nach Anspruch 1, bei der die Generatorgleichung die Form

$$y(P)=C_0+C_1 sgn(P-P_1)+C_2 sgn(P-P_2)+C_3 sgn(P-P_3)...C_n sgn(P-P_n)$$

besitzt.

8. Verfahren zum Erzeugen digitaler Wellenformen zum Prüfen einer Anordnung von logischer Gatter (6) mit den Schritten:

Aufnehmen eines Satzes von Eingabewerten, welche das Argument einer Erzeugergleichung bilden,

Schaffen einer Folge von Ausgabewerten in Binärform, von denen jeder Ausgabewert das jedem Eingabewert entsprechende errechnete Ergebnis der Erzeugergleichung umfaßt, und

Ausgeben der Folge von Ausgabewerten an die in Prüfung befindlichen Anordnung von Logikgattern (6).

**Revendications**

1.  Un appareillage pour produire des signaux numériques pour l'évaluation d'un réseau de portes logiques (6), ledit appareil comprenant des moyens de calcul (1) susceptibles d'être utilisés pour recevoir un jeux de valeurs d'entrée qui constitue un argument d'une équation génératrice et pour créer une séquence de valeurs de sortie numériques, chacune comprenant le résultat calculé de l'équation génératrice, et des moyens (4) d'application, lesdites valeurs de sortie numériques au réseau de portes logiques (6) sous évaluation.

2.  Un appareillage selon la revendication 1, dans lequel les moyens d'application des valeurs de sortie numériques au réseau de portes logiques sont une série de conducteurs (4).

3.  Un appareillage selon la revendication 1 ou 2. dans lequel les moyens d'application des valeurs de sortie numériques au réseau de portes logiques comprennent un circuit tampon 5.

4.  Un appareillage selon l'une quelconque des revendications précédentes et comprenant une première mémoire (3) raccordée auxdits moyens de calcul (1) pour stocker ledit jeux de valeurs d'entrée reçu.

5.  Un appareillage selon l'une quelconque des revendications précédentes et comprenant une seconde mémoire (2) raccordée auxdits moyens de calcul (1) pour stocker une équation génératrice.

6.  Un appareillage selon l'une quelconque des revendications précédentes. dans lequel l'équation génératrice inclut un terme comprenant l'inverse d'une fonction trigonométrique.

7.  Un appareil selon la revendication 1, dans lequel l'équation génératrice a la forme:

$$y(P)=C_0+C_1 sgn(P-P_1)+C_2 sgn(P-P_2)+C_3 sgn(P-P_3)...C_n sgn(P-P_n)$$

8.  Une méthode de génération dde signaux numériques pour l'évaluation d'un réseau de portes logiques (6). la méthode comprenant les étapes de :

    -   réception d'un jeux de valeurs d'entrée qui constituent l'argument d'une équation génératrice ;
    -   création d'une séquence de valeurs de sortie sous forme binaire, chaque valeur de sortie comprenant le résultat calculé de l'équation génératrice correspondant à chacune des valeurs entrées ; et
    -   sortie de ladite séquence de valeurs de sortie audit réseau de portes logiques (6) en cours d'évaluation.

Fig.1.

# Fig.2A

WIRE 8 (MSB)
WIRE 7
WIRE 6
WIRE 5
WIRE 4
WIRE 3
WIRE 2
WIRE 1 (LSB)

REQUIRED BIT STREAM ON 8 WIRES

# Fig.2B

(MSB)

| 0 | 0 | 0 | 0 | 0 | 0 | 0 | 0 | 1 | 0 |
| 0 | 0 | 0 | 0 | 0 | 0 | 0 | 1 | 0 | 0 |
| 0 | 0 | 0 | 0 | 0 | 0 | 1 | 0 | 0 | 0 |
| 0 | 0 | 0 | 0 | 0 | 1 | 0 | 0 | 0 | 0 |
| 0 | 0 | 0 | 0 | 1 | 0 | 0 | 0 | 0 | 0 |
| 0 | 0 | 0 | 1 | 0 | 0 | 0 | 0 | 0 | 0 |
| 0 | 0 | 1 | 0 | 0 | 0 | 0 | 0 | 0 | 0 |
| 0 | 1 | 0 | 0 | 0 | 0 | 0 | 0 | 0 | 0 |

(LSB)

BOOLEAN STATES

| 0 | 1 | 2 | 4 | 8 | 16 | 32 | 64 | 128 | 0 | ← DECIMAL WORDS |